# EUROPEAN PATENT SPECIFICATION

(11) **EP 1 914 958 B1**
(45) Date of publication and mention of the grant of the patent: **07.01.2009**
(21) Application number: 06122595.9
(22) Date of filing: 19.10.2006
(51) Int. Cl.: H04L 29/08, H04L 12/24

(54) **System and method for providing debug information in session initiation protocol sessions**
System und Verfahren zum Bereitstellen von Fehlersuchinformation in SIP Sitzungen
Système et procédé pour fournir d'information de débogage dans les sessions de SIP

(43) Date of publication of application: 23.04.2008
(73) Proprietor: Research In Motion Limited, Waterloo, Ontario N2L 3W8 (CA)
(72) Inventor: Lai, Frederick Chee-Kiong, Waterloo Ontario N2V 2L1 (CA)
(74) Representative: Rickard, David John

(56) References cited:
- WO-A-20/04034638
- BARNES M ET AL: "An Extension to the Session Initiation Protocol (SIP) for Request History Information" IETF STANDARD, INTERNET ENGINEERING TASK FORCE, IETF, CH, November 2005 (2005-11), XP015043191 ISSN: 0000-0003
- JIRI KUTHAN IPTEL ORG: "Requirements for Diagnostics Support in SIP" IETF STANDARD-WORKING-DRAFT, INTERNET ENGINEERING TASK FORCE, IETF, CH, October 2002 (2002-10), XP015004061 ISSN: 0000-0004

## Description

Embodiments of the system and method described herein relate generally to the Session Initiation Protocol (SIP), and more specifically, to a system and method for providing debug information in SIP sessions.

There exist a number of protocols used in the communication of various forms of real-time multimedia data, such as voice, video, or text messages. One example of a known protocol is the Session Initiation Protocol (SIP), a standard of the Internet Engineering Task Force (IETF). SIP is an application-layer control protocol that can establish, modify, and terminate multimedia sessions, such as Internet telephony calls for example, between two or more endpoints. SIP is a text-based protocol that is typically used with other IETF protocols (e.g. transport protocols, streaming protocols, etc.) to build voice and multimedia services.

An endpoint in a SIP session may be referred to as a user agent. In operation, a user agent can function in the role of either a user agent client (UAC) or a user agent server (UAS). Typically, a UAC is an application that initiates a SIP request, whereas a UAS is an application that contacts a user when a SIP request is received and returns a response on behalf of the user to the UAC. Generally, a SIP endpoint can function as both a UAC and a UAS, but only as one of these for a given transaction. Whether the endpoint functions as a UAC or a UAS depends on whether that endpoint initiated the SIP request in respect of that particular transaction.

Data that is transmitted in accordance with SIP, between a UAC and a UAS, is sent as messages. SIP is a request-response protocol, similar in syntax to some known protocols such as the HyperText Transfer Protocol (HTTP). A SIP message is either a request or a response.

Messages sent between user agents in the establishment of SIP sessions may contain errors. Some of these errors may be easily detectable by a parser. When errors occur, it may be desirable to provide information to a network administrator, for example. This may assist in the debugging of applications responsible for such errors.

WO-A-2004/034638 discloses a method for distributed diagnostics in a communication network that uses debug messages. Here a debug message is used to invoke or initiate debugging functions as various network components or to identify where debugging results may be delivered.

### General

In one broad aspect, there may be provided a method of providing debug information in messages exchanged between two user agents in a session established in accordance with a session initiation protocol, the method comprising the following steps performed by a first user agent:
generating a first session initiation protocol request;
transmitting the first session initiation protocol request to a second user agent; receiving a response to the first session initiation protocol request from the second user agent;
generating a second session initiation protocol request comprising an additional debug header, the additional debug header comprising information pertaining to the response received from the second user agent to the first session initiation protocol request; and
transmitting the second session initiation protocol request comprising the additional debug header to the second user agent.

In another broad aspect, there may be provided a system for providing debug information in messages exchanged in a session established in accordance with a session initiation protocol, the system comprising a first device, wherein the first device comprises an application programmed to: generate a session initiation protocol request comprising an additional debug header; and transmit the session initiation protocol request comprising the additional debug header to a remote device.

### Brief Description of the Drawings

For a better understanding of embodiments of the systems and methods described herein, and to show more clearly how they may be carried into effect, reference will be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is an example of a SIP message exchange between two users; and
FIG. 5 is a flowchart illustrating steps in a method of providing debug information in a SIP session, in one exemplary embodiment.

### Description of Preferred Embodiments

When errors in a SIP message exchange occur, it may be desirable to make details of such errors available to user agents and network administrators. In embodiments of the system and method described herein, these details may be provided at the protocol level.

For example, a text comment may be provided in an additional debug header of a SIP message. The content of the comment may then be used by a network administrator, or by the user agent receiving the SIP message comprising the additional debug header, to identify potential application bugs.

In one broad aspect, there may be provided a method of providing debug information in messages exchanged between two user agents in a session established in accordance with a session initiation protocol, the method comprising the following steps performed by a first user agent: generating a session initiation protocol request comprising an additional debug header; and transmitting the session initiation protocol request comprising the additional debug header to a second user agent.

In another broad aspect, there may be provided a system for providing debug information in messages exchanged in a session established in accordance with a session initiation protocol, the system comprising a first device, wherein the first device comprises an application programmed to: generate a session initiation protocol request comprising an additional debug header; and transmit the session initiation protocol request comprising the additional debug header to a remote device.

These and other aspects will be described or will become apparent from the following description and the appended claims.

Generally, SIP is a signaling protocol used for establishing sessions in an Internet Protocol (IP) network. For example, a session could be a simple two-way telephone call, or a collaborative multi-media conference session.

Referring to the architecture of a typical SIP network, the physical components of the network can generally be grouped into two categories, namely SIP servers and SIP clients. Examples of known SIP servers may include, for example, proxy servers, redirect servers, and registrar servers. Examples of SIP clients may include, for example, gateways and phones. It will be understood by persons skilled in the art that while a phone may be considered a "client" in the architecture of a SIP network, in operation, the phone may act either as a UAS and UAC, depending on whether it initiates a SIP request in respect of a particular transaction. A phone may include, for example, devices known as SIP IP phones, soft phones, and other phones adapted to initiate and respond to SIP requests.

In one embodiment, a mobile device, also known in the art as a mobile station, may be adapted to function as a SIP client.

A mobile device is a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

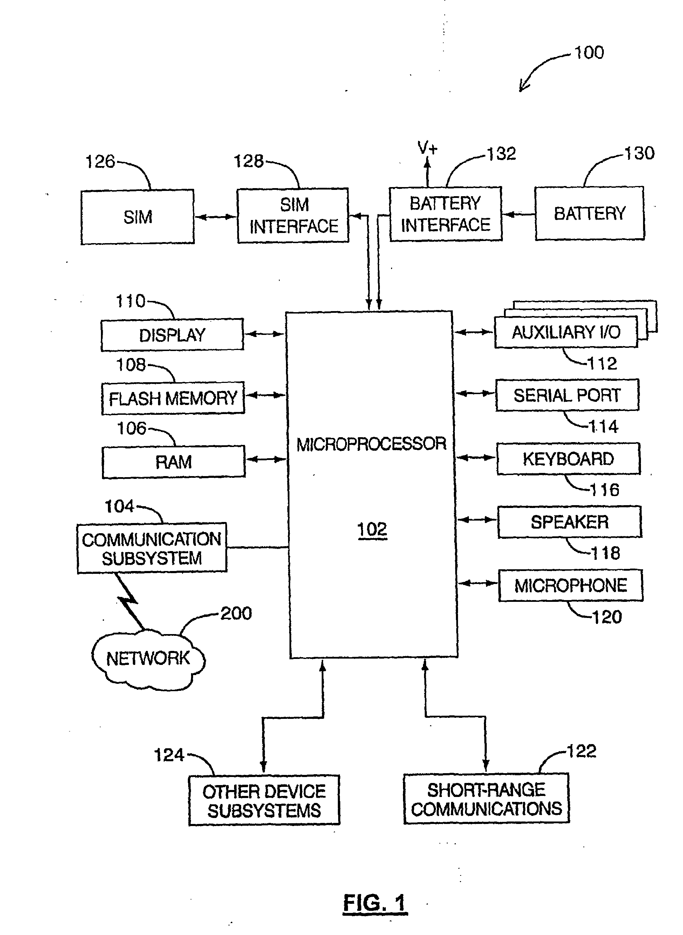

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems.

Other network communication technologies that may be employed include, for example, Integrated Digital Enhanced Network (iDEN™), Evolution-Data Optimized (EV-DO), and High Speed Downlink Packet Access (HSDPA).

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, task items, contact items and note items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary I/O subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

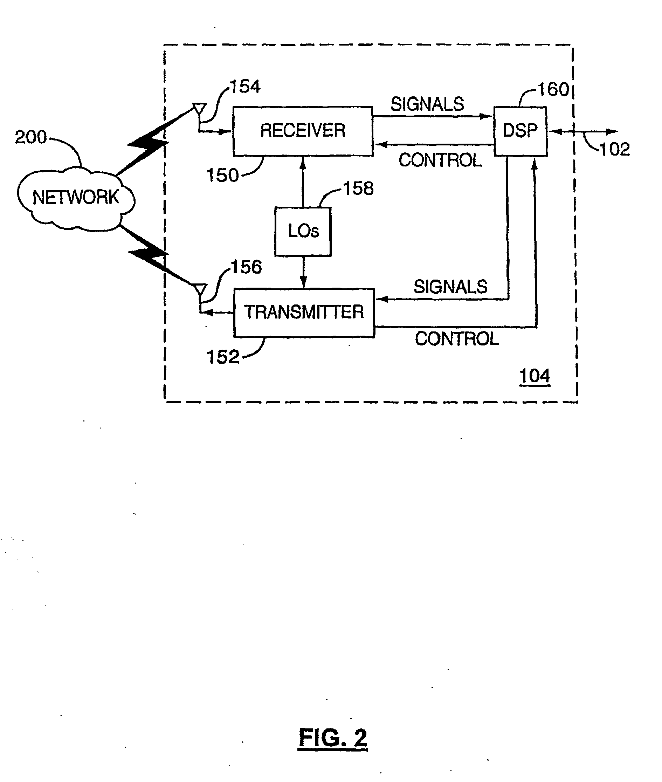

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

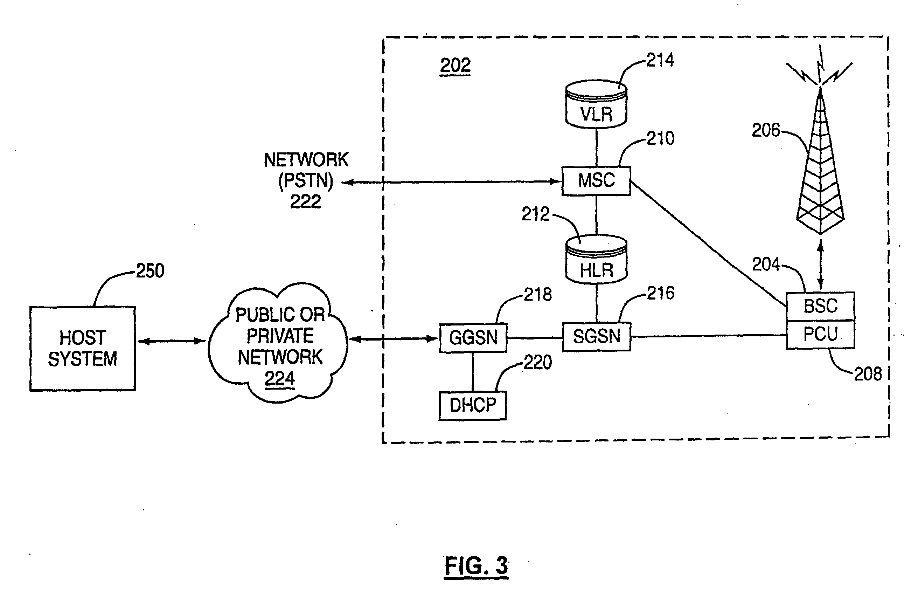

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and may store the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

As stated earlier in this description, SIP is an application-layer control protocol that can establish, modify, and terminate multimedia sessions, such as Internet telephony calls. It will be understood by persons skilled in the art that in most contexts, the terms "call", "session" and "conference" may be used interchangeably.

The current version of the protocol is defined in a Request for Comments 3261 (RFC 3261) document, the contents of which are herein incorporated by reference. However, it will also be understood by persons skilled in the art that changes may be made to SIP, and that such modifications and variations to the current protocol is not intended to limit the applicability of the embodiments of the system and method as described herein.

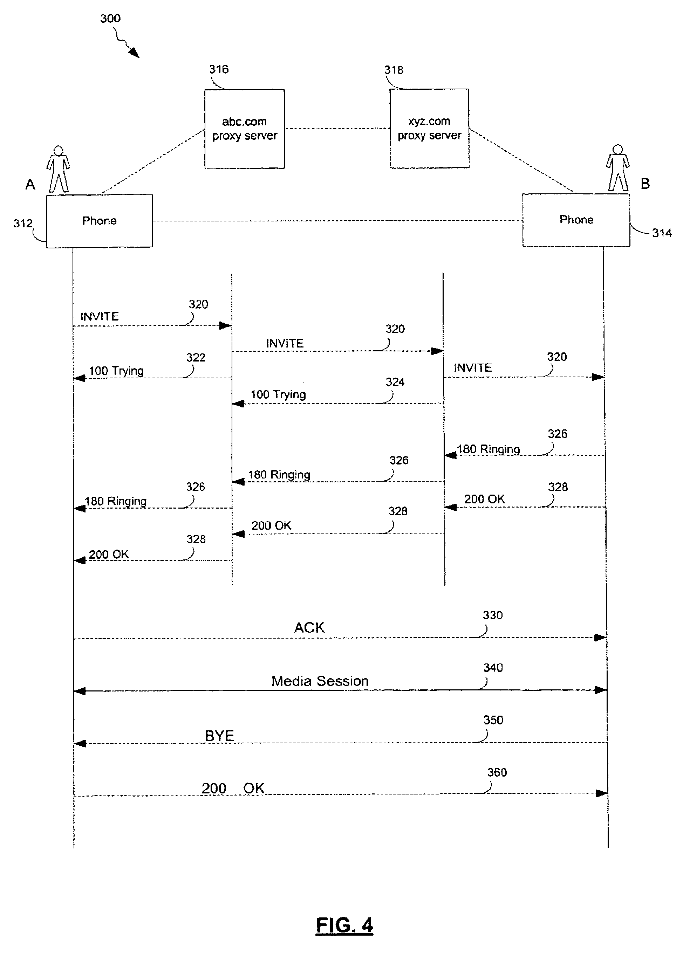

To illustrate a number of basic operations of SIP, an example of a SIP message exchange is provided in FIG. 4. The following description is not intended to be a complete description of the protocol, and it will be understood by persons skilled in the art that only a subset of features of SIP are described herein, for illustration purposes only, in order to facilitate better understanding of the embodiments of the system and method disclosed herein.

Referring to FIG. 4, an example of a SIP message exchange between two users is shown generally as 300. This example generally illustrates the following basic functions of SIP: the locating of an endpoint, the signaling of a desire to communicate, the negotiation of session parameters to establish a session, and the teardown of the session once established.

In the example SIP message exchange 300 shown in FIG. 4, user A initiates a call to user B over the Internet (this may be the shared network infrastructure 224 of FIG. 3 in certain embodiments). The call is initiated by user A using a SIP application on A's phone 312. Phone 312 may be a soft phone, SIP IP phone, or other device that can initiate SIP requests. Phone 312 will typically also be enabled to respond to SIP requests.

Messages transmitted from A's phone 312 will be received by a SIP application on B's phone 314. Phone 314 may be a soft phone, SIP IP phone, or other device that can respond to SIP requests. Phone 314 will typically also be enabled to initiate SIP requests.

In this example, two SIP proxy servers 316, 318 act on behalf of A and B respectively to facilitate the establishment of the SIP session. This arrangement is provided by way of example only, and other SIP network configurations are possible. In particular, it is not essential that proxy servers be employed in SIP network configurations.

Users in a SIP network are identified by SIP identities, known as SIP Uniform Resource Identifiers (SIP URI). A SIP URI is similar in form to an e-mail address, typically containing a username and a host name (e.g. sip:a@abc.com, sip:b@xyz.com). SIP also provides for the use of secure SIP URIs.

SIP is based on a request/response transaction model, where each transaction consists of a request that invokes a particular method, or function, on the server and generally at least one response. A SIP message is either a request from a client (e.g. UAC) to a server (e.g. UAS), or a response from a server (e.g. UAS) to a client (e.g. UAC). Both request and response messages generally consist of a start-line (e.g. a Request-Line for SIP Requests, a Status-Line for SIP Responses), one or more message header fields ("headers"), an empty line (e.g. a line with no text terminated by a carriage-return line-feed sequence (CRLF)) indicating the end of the header fields, and an optional message body:
- generic-message =: start-line
*message-header
CRLF
[message-body ]
- start-line =: Request-Line / Status-Line

Referring to the example of FIG. 4, A initiates a call from A's phone 312 to B. This transaction begins with an INVITE request 320. INVITE is an example of a SIP method that specifies the action that the requestor (A) wants the server (B) to take. As with any typical SIP request, the INVITE request 320 contains a number of header fields, which are named attributes that provide additional information about a message. The header fields in an INVITE request 320, in this example, may include a unique identifier for the call, the addresses of A and B, and information about the type of session that A wishes to establish with B.

Details of the session (e.g. type of media, codec, or sampling rate) that is to be established are provided in the body of a SIP message, which contains a description of the session encoded in some other protocol format, such as the Session Description Protocol (SDP), for example.

The INVITE request 320 is forwarded to B's phone 314 via a proxy server 316 that serves A's domain, and via a proxy server 318 that serves B's domain. Network elements that receive the INVITE request 320 will then typically generate a response message. Responses in SIP use a three-digit status code, followed by a descriptive phrase. In this example, proxy server 314 receives the INVITE request 320 and sends a 100 (Trying) response 322 back to A's phone 312, indicating that the INVITE request 320 has been received and that proxy server 316 is working to route the INVITE request 320 to the destination.

Proxy server 316 locates the destination proxy server 318, possibly by performing a Domain Name Service (DNS) lookup. Once proxy server 316 locates the IP address of destination proxy server 318, proxy server 316 forwards the INVITE request 320 received from A's phone 312 to destination proxy server 318. Destination proxy server 318 receives the forwarded INVITE request 320 and responds to proxy server 316 with its own 100 (Trying) response 324, indicating that the forwarded INVITE request 320 has been received and is being processed. Destination proxy server 318 consults a database ("location service") [not explicitly shown] that contains B's current IP address.

B's phone 314 receives the INVITE request 320 and alerts user B of the incoming call from A (e.g. B's phone 314 rings). A 180 (Ringing) response 326 is generated at B's phone 314. The 180 (Ringing) response 326 is transmitted to A's phone 312 via destination proxy server 318 and then proxy server 316. A's phone 312 receives the 180 (Ringing) response 326 and alerts user A (e.g. using an audio ringing tone or by displaying a message).

If user B answers the call, B's phone 314 will send a 200 (OK) response 328 to A's phone. The 200 (OK) response 328 is transmitted via destination proxy server 318 and then proxy server 316, indicating that the call has been answered. The 200 (OK) response 328 contains a message body with the SDP media description of the type of session that B is willing to establish with A. Accordingly, there is a two-phase exchange of SDP messages (i.e. one sent to B from A, and one sent to A from B), which provides basic negotiation capabilities based on a simple offer/answer model of SDP exchange.

If user B did not wish to answer the call or was busy on another call, an error response [not shown in FIG. 4] would have been sent, rather than the 200 (OK) response 328. A media session would not be established in that case.

When the 200 (OK) response 328 is received at A's phone 312, an indication that the call has been answered is provided to user A (e.g. stopping the ringing audio tone, displaying a message). A's phone 312 sends an acknowledgement (ACK) message 330 to B's phone 314, to confirm reception of B's 200 (OK) response 328. In this example, the ACK message 330 is sent directly from A's phone 312 to B's phone 314, bypassing the two proxy servers 316, 318 as the lookup functionality of those servers is no longer required. This completes a three-way handshake (e.g. of INVITE, 200, ACK messages) used to establish SIP sessions.

Subsequently, a media session 340 between A and B begins, where media packets are sent between A's phone 312 and B's phone 314, bypassing proxy servers 316, 318, using the agreed format.

In this example, user B ends the call and disconnects first. In that case, B's phone 314 generates a BYE message 350 that is transmitted directly to A's phone 312. Receipt of the BYE message 350 is confirmed by A's phone 312 with a 200 (OK) response 360, and the session is terminated.

In the above example, since A's phone 312 (i.e. typically, an application executing on A's phone 312) initiates the call to B's phone 314 (again, typically, to an application executing on B's phone 314) through transmission of the initial INVITE request 320, and B's phone 314 subsequently responds to that INVITE request 320 (e.g. using a 200 (OK) response 328), A's phone 312 is considered to function as a UAC while B's phone 314 is considered to function as a UAS in respect of this particular transaction.

A SIP message is either a request or a response. SIP requests are distinguished by having a Request-Line for a start-line. A Request-Line contains, among other things, a method name such as, for example: INVITE, ACK, CANCEL, BYE, REGISTER and OPTIONS. On the other hand, SIP responses are distinguished from requests by having a Status-Line as their start line. A Status-Line contains, among other things, a Status-Code and a Reason-Phrase. A Status-Code is a 3-digit integer result code that indicates the outcome of an attempt to understand and satisfy a request, and a Reason-Phrase is generally intended to give human users a brief textual description of the Status-Code.

Some messages sent between user agents in the establishment of SIP sessions may contain errors. Some of these errors may be easily detectable by a parser. When errors occur, it may be desirable to provide details about these errors to a network administrator, for example, which may assist in the debugging of applications responsible for such errors.

Consider, for example, a situation where a proxy server receives an INVITE request from a UAC and wishes to challenge the identity of the UAC that generated the request. In that case, the proxy may generate a 407 (Proxy Authentication Required) message, in response to the request from the UAC. This response might take the following general form (with appropriate values replacing the terms marked in parentheses):
407 Authentication Required
To: <to string>
From: <from string>
WWW-Authenticate: <string representing authentication challenge>

Suppose that when this response by the proxy server is received by the UAC that generated the initial request, it contained errors. For example, the line containing the authentication challenge might be lost in transmission, and the response, in fact, was received by the UAC as follows:
407 Authentication Required
To: <to string>
From: <from string>

Since the message received by the UAC is expected to contain the WWW-Authenticate header and corresponding authentication challenge, and that information is missing, it would be difficult for the UAC to justify this as a valid packet.

Embodiments described herein relate generally to a system and method that allows a user agent to communicate information to a network administrator or other user agent. This information may be logged and/or used for debugging purposes, which may be deemed to include network maintenance purposes.

With respect to the above example, there is provided a means for notifying a network administrator, or the proxy server that sent the 407 (Proxy Authentication Required) message, that the WWW-Authenticate header and authentication challenge was missing from the message actually received by the UAC.

In accordance with embodiments of the system and method described herein, the debug information is communicated by a user agent at the protocol level, by including an additional debug header with an outgoing message from the user agent. Providing this information at the protocol level may afford greater flexibility in the use and display of this information by the various elements of a SIP network.

In the example described above, the additional debug header (e.g. "Note: <insert debug information here>") may be appended to a standard ACK message generated by the UAC. The header value may comprise a textual description of the error identified by the UAC in the response previously received by the UAC from the proxy server:
ACK
To: <to information>
From: <from information>
<other misc headers>
Note: WWW-Authentication message not found in 407 response

The contents of the additional debug header in such a message need not be used by the user agent that receives the message. This information may instead, for example, be forwarded to technical support centers for further investigation, by an administrator monitoring message packet logs maintained by a user agent within the SIP network.

In at least one embodiment, the additional debug header comprising debug information is provided in a SIP request, namely any message that is sent from a UAC to a UAS in respect of a particular transaction.

In one such embodiment, more specifically, the additional debug header comprising debug information is provided in an ACK request.

SIP provides for a number of headers and error codes (e.g. Error-Info, Warning) that may be used to provide information to a UAC on certain errors encountered by a UAS receiving a request from the UAC.

However, these codes are generally used to inform a UAC why a particular request from the UAC cannot be fulfilled by the UAS. There may be situations where it is desirable to inform the sender of a *response* (e.g. the UAS) that the response contains an error.

The error codes provided by SIP are not used for this purpose. This might be attributed, in part, to the fact that certain requests generated by a UAC are requests that take no response (e.g. ACK). For example, a UAS would generally not be permitted to challenge an ACK request. Furthermore, the emphasis on the use of such error codes may be to describe why a request from a UAC cannot be fulfilled, and not to identify situations where responses received by a UAC might contain errors. It may be assumed that if a request cannot be fulfilled for some reason, the UAC will make the appropriate corrections and resend the request. However, there may be instances where the UAC is not responsible for message errors.

Accordingly, in at least one embodiment, the additional debug header may be used to provide information to a UAS from a UAC in a *request.*

In one embodiment, the additional debug header is provided in a second request that is transmitted to a UAS by the UAC, after the UAC has received a response from the UAS to an earlier first request transmitted to the UAS by the UAC. In this case, the UAC may wish to provide information pertaining to the response of the UAS to the first request (e.g. information describing an error associated with the response), which may be subsequently used for debugging purposes, for example.

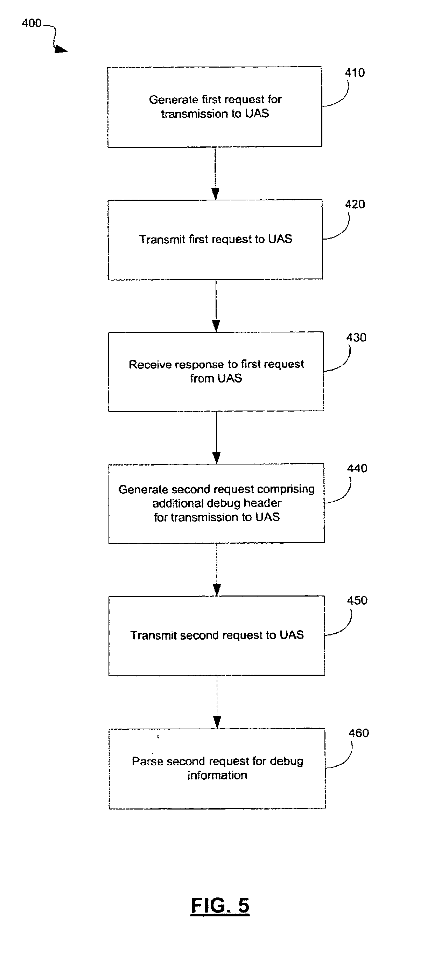

Referring now to FIG. 5, a flowchart illustrating steps in a method of providing debug information in a SIP session in one exemplary embodiment is shown generally as 400.

At step 410, a UAC generates a first request (e.g. an INVITE message) for transmission to a UAS. The UAC may be an application executing on a user's phone (e.g. a SIP IP phone, a soft phone). This step may be performed, for example, in response to a first user operating his phone to call a second user operating a different phone, over the Internet.

At step 420, this first request is transmitted to a UAS, which is an entity that generates a response to the first request of the UAC. The UAS may be, for example, an application executing on the second user's phone, or on a proxy server or some other server or device through which the call is routed.

At step 430, the response to the first request that was generated by the UAS is received by the UAC. Generally, this response may be any response defined in SIP, including for example, responses comprising authentication challenges.

At step 440, the UAC generates a second request (e.g. an ACK message) for transmission to a UAS. The second request comprises at least one additional debug header (e.g. "Note: <insert debug information here>") for providing debug information. In this embodiment, the information pertains to the response that was generated by the UAS, and that was received by the UAC at step 430.

For example, the header field may include a text message that indicates an error in the response previously received at step 430 (e.g. missing authentication challenge), which may subsequently be used by the UAS or by a network administrator for debugging purposes.

At step 450, the second request generated at step 440 is transmitted to the UAS.

Subsequently, as shown at step 460, the second request may be parsed for debug information contained in the header field of the additional debug header. This step may be performed at the UAC, at the UAS, and/or at some other device.

While an example has been herein described in which an additional debug header is provided with an ACK message, the additional debug header may be provided in other SIP requests. For example, messages of the following types may also provide the additional debug header: INVITE, CANCEL, BYE, REGISTER and/or OPTIONS.

In variant embodiments, multiple additional debug headers may be provided within a message.

The steps of a method of providing debug information in a SIP session in embodiments described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of providing debug information in messages exchanged between two user agents in a session established in accordance with a session initiation protocol, the method comprising the following steps performed by a first user agent:
generating (410) a first session initiation protocol request;
transmitting (420) the first session initiation protocol request to a second user agent;
receiving (430) a response to the first session initiation protocol request from the second user agent;
generating (440) a second session initiation protocol request comprising an additional debug header, the additional debug header comprising information pertaining to the response received from the second user agent to the first session initiation protocol request; and
transmitting (450) the second session initiation protocol request comprising the additional debug header to the second user agent.

2. The method of claim 1, wherein the additional debug header comprises a header field, wherein the header field comprises at least one text value.

3. The method of claim 2, wherein the header field comprises at least one text value identifying an error in the response received from the second user agent at the receiving step.

4. The method of any one of the preceding claims, wherein the second session initiation protocol request comprising the additional debug header is an ACK message.

5. The method of any one of the preceding claims, wherein the first session initiation protocol request is an INVITE message.

6. The method of any preceding claim in which the first user agent is a user agent client.

7. The method of any preceding claim in which the second user agent is a user agent server.

8. A computer-readable medium on which a plurality of executable instructions is stored, the instructions for causing a computing device or system to perform the steps of the method of any one of the preceding claims.

9. A system for providing debug information in messages exchanged in a session established in accordance with a session initiation protocol, the system comprising a first device, wherein the first device comprises an application programmed to perform the steps of the method of any of claims 1 to 7.

10. The system of claim 9, wherein the first device is a mobile device (100).

11. The system of claim 9 or claim 10, wherein in operation a remote device operates as the second user agent, and wherein the first device and the remote device are couplable within a network, over which the messages in the session established in accordance with the session initiation protocol are exchanged.

12. The system of claim 11, wherein the network is the Internet.

13. The system of claim 11 or claim 12, wherein the first device and remote device are coupled within the network via at least one proxy server.

## Patentansprüche

1. Verfahren zum Bereitstellen von Fehlersuchinformationen in Nachrichten, die zwischen zwei Benutzeragenten ausgetauscht werden in einer Sitzung, die gemäß einem SIP-Protokoll (Session Initiation Protocol) eingerichtet wurde, das Verfahren umfassend die folgenden Schritte, welche durch einen ersten Benutzeragenten ausgeführt werden:
das Erzeugen (410) einer ersten SIP-Protokollanforderung;
das Übertragen (420) der ersten SIP-Protokollanforderung zu einem zweiten Benutzeragenten;
das Empfangen (430) einer Antwort auf die erste SIP-Protokollanforderung von dem zweiten Benutzeragenten;
das Erzeugen (440) einer zweiten SIP-Protokollanforderung, die einen zusätzlichen Fehlersuch-Header umfasst, wobei der zusätzliche Fehlersuch-Header Informationen umfasst, die für die Antwort relevant sind, welche von dem zweiten Benutzeragent auf die erste SIP-Protokollanforderung hin empfangen wurde; und
das Übertragen (450) der zweiten SIP-Protokollanforderung, welche den zusätzlichen Fehlersuch-Header umfasst, zu dem zweiten Benutzeragenten.

2. Verfahren gemäß Anspruch 1, wobei der zusätzliche Fehlersuch-Header ein Header-Feld umfasst, wobei das Header-Feld mindestens einen Textwert umfasst.

3. Verfahren gemäß Anspruch 2, wobei das Header-Feld mindestens einen Textwert umfasst, der einen Fehler in der Antwort identifiziert, welche im Schritt des Empfangens von dem zweiten Benutzeragenten empfangen wurde.

4. Verfahren gemäß einem der vorherigen Ansprüche, wobei die zweite SIP-Protokollanforderung, welche den zusätzlichen Fehlersuch-Header umfasst, eine ACK-Nachricht ist.

5. Verfahren gemäß einem der vorherigen Ansprüche, wobei die erste SIP-Protokollanforderung eine INVITE-Nachricht ist.

6. Verfahren gemäß einem der vorherigen Ansprüche, wobei der erste Benutzeragent ein Benutzeragent-Client ist.

7. Verfahren gemäß einem der vorherigen Ansprüche, wobei der zweite Benutzeragent ein Benutzeragent-Server ist.

8. Computerlesbares Medium, auf dem eine Vielzahl von ausführbaren Anweisungen gespeichert sind, wobei die Anweisungen bewirken, dass ein Computergerät oder System die Schritte des Verfahrens gemäß einem der vorherigen Ansprüche ausführt.

9. System zum Bereitstellen von Fehlersuchinformationen in Nachrichten, die in einer Sitzung ausgetauscht werden, welche gemäß einem SIP-Protokoll (Session Initiation Protocol) eingerichtet wurde, das System umfassend ein erstes Gerät, wobei das erste Gerät eine Anwendung umfasst, die zur Ausführung der Schritte des Verfahrens gemäß einem der Ansprüche 1 bis 7 programmiert wurde.

10. System gemäß Anspruch 9, wobei das erste Gerät ein Mobilgerät (100) ist.

11. System gemäß Anspruch 9 oder Anspruch 10, wobei beim Betrieb ein entferntes Gerät als der zweite Benutzeragent betrieben wird und wobei das erste Gerät und das entfernte Gerät in einem Netzwerk gekoppelt werden können, über welches der Austausch der Nachrichten in der Sitzung erfolgt, die gemäß dem SIP-Protokoll (Session Initiation Protocol) eingerichtet wurde.

12. System gemäß Anspruch 11, wobei das Netzwerk das Internet ist.

13. System gemäß Anspruch 11 oder Anspruch 12, wobei das erste Gerät und das entfernte Gerät in dem Netzwerk über mindestens einen Proxy-Server gekoppelt sind.

## Revendications

1. Procédé permettant de fournir des informations de débogage dans des messages échangés entre deux agents utilisateur au cours d'une session établie conformément à un protocole d'ouverture de session SIP, le procédé comprenant les étapes suivantes mises en oeuvre par un premier agent utilisateur :
création (410) d'une première demande de protocole d'ouverture de session SIP ;
transmission (420) de la première demande de protocole d'ouverture de session SIP à un deuxième agent utilisateur ;
réception (430) d'une réponse du deuxième agent utilisateur à la première demande de protocole d'ouverture de session SIP ;
création (440) d'une deuxième demande de protocole d'ouverture de session SIP comprenant un en-tête de débogage supplémentaire, l'en-tête de débogage supplémentaire comprenant des informations relatives à la réponse du deuxième agent utilisateur à la première demande de protocole d'ouverture de session SIP ; et
transmission (450) de la deuxième demande de protocole d'ouverture de session SIP comprenant l'en-tête de débogage supplémentaire au deuxième agent utilisateur.

2. Procédé selon la revendication 1, dans lequel l'en-tête de débogage supplémentaire comprend un champ d'en-tête et dans lequel le champ d'en-tête comprend au moins une valeur de texte.

3. Procédé selon la revendication 2, dans lequel le champ d'en-tête comprend au moins une valeur de texte identifiant une erreur dans la réponse du deuxième agent utilisateur au cours de l'étape de réception.

4. Procédé selon l'une quelconque des revendications précédentes, dans lequel la deuxième demande de protocole d'ouverture de session SIP comprenant l'en-tête de débogage supplémentaire est un message d'accusé de réception (ACK).

5. Procédé selon l'une quelconque des revendications précédentes, dans lequel la première demande de protocole d'ouverture de session SIP est un message d'invitation (INVITE).

6. Procédé selon l'une quelconque des revendications précédentes, dans lequel le premier agent utilisateur est un client d'agent utilisateur.

7. Procédé selon l'une quelconque des revendications précédentes, dans lequel le deuxième agent utilisateur est un serveur d'agent utilisateur.

8. Support lisible par ordinateur mémorisant une pluralité d'instructions pouvant être exécutées, ces instructions pouvant amener un dispositif ou système informatique à mettre en oeuvre les étapes du procédé selon l'une quelconque des revendications précédentes.

9. Système permettant de fournir des informations de débogage dans des messages échangés au cours d'une session établie conformément à un protocole d'ouverture de session SIP, le système comprenant un premier dispositif dans lequel le premier dispositif comprend une application programmée de sorte à mettre en oeuvre les étapes du procédé selon l'une quelconque des revendications 1 à 7.

10. Système selon la revendication 9, dans lequel le premier dispositif est un dispositif mobile (100).

11. Système selon la revendication 9 ou 10, dans lequel, en fonctionnement, un dispositif distant sert de deuxième agent utilisateur, et dans lequel le premier dispositif et le dispositif distant peuvent être associés dans un réseau dans lequel les messages de la session établie conformément à un protocole d'ouverture de session SIP sont échangés.

12. Système selon la revendication 11, dans lequel le réseau est l'Internet.

13. Système selon la revendication 11 ou 12, dans lequel le premier dispositif et le dispositif distant sont associés dans le réseau par l'intermédiaire d'un serveur proxy.
